# NEW EUROPEAN PATENT SPECIFICATION

(11) **EP 2 101 123 B2**
(45) Date of publication and mention of the opposition decision: **05.08.2020**
(45) Mention of the grant of the patent: 02.11.2016
(21) Application number: 09154781.0
(22) Date of filing: 10.03.2009
(51) Int. Cl.: F16K 31/40, F16K 31/524, F24H 9/12, E03C 1/10, F24D 3/10

(54) **A water disconnector unit, in particular for controlling the supply of water to a water circuit of a boiler**
Wassertrenneinheit, insbesondere zur Steuerung der Wasserzufuhr zur einem Wasserkreislauf eines Boilers
Unité de sectionneur d'eau, en particulier pour contrôler l'alimentation en eau dans un circuit d'eau d'une chaudière

(30) Priority: 11.03.2008 IT TO20080036 U
(43) Date of publication of application: 16.09.2009
(73) Proprietor: ELBI International S.p.A., 10129 Torino (IT)
(72) Inventor: Farano, Michele, 10137 Torino (IT)
(74) Representative: Vanzini, Christian

(56) References cited:
- EP-A2- 1 681 520
- EP-A2- 1 780 472
- EP-A2- 1 832 816
- DE-C- 713 656
- GB-A- 2 231 939
- IT-B- 1 211 413
- JP-A- 2002 004 365
- JP-A- 2004 211 867
- US-A1- 2004 051 064

## Description

The present invention relates to a water disconnector unit, in particular for controlling the supply of water to a water circuit of a boiler, according to the preamble to Claim 1.

An object of the present invention is to provide an improved water disconnector unit which is reliable, easy to operate, and inexpensive to manufacture.

More specifically, one of the technical problems which is solved by the invention is to enable the disconnector unit to be controlled not only manually but also, independently, by means of an automatic actuation, without prejudicing the manual control function.

This and other objects are achieved, according to the invention, by means of a water disconnector unit having the characteristics of appended Claim 1.

Preferred embodiments of the invention are indicated in the dependent claims.

Further characteristics and advantages of the invention will become clear from the following detailed description which is given purely by way of non-limiting example with reference to the appended drawings, in which:
Figure 1 is a three-dimensional view of a first embodiment of a water disconnector unit according to the invention,
Figure 2 shows the disconnector unit of Figure 1 from below,
Figure 3 is a longitudinal section through the disconnector unit of the preceding drawings, arranged in a first operative configuration,
Figure 4 shows the disconnector unit sectioned on the line IV-IV of Figure 3 and in a first operative configuration,
Figures 5 and 6 are views similar to Figure 3 but showing the disconnector unit in a second and a third operative configuration, and
Figure 7 is an enlarged section through a portion of a valve device of the disconnector unit according to the invention.

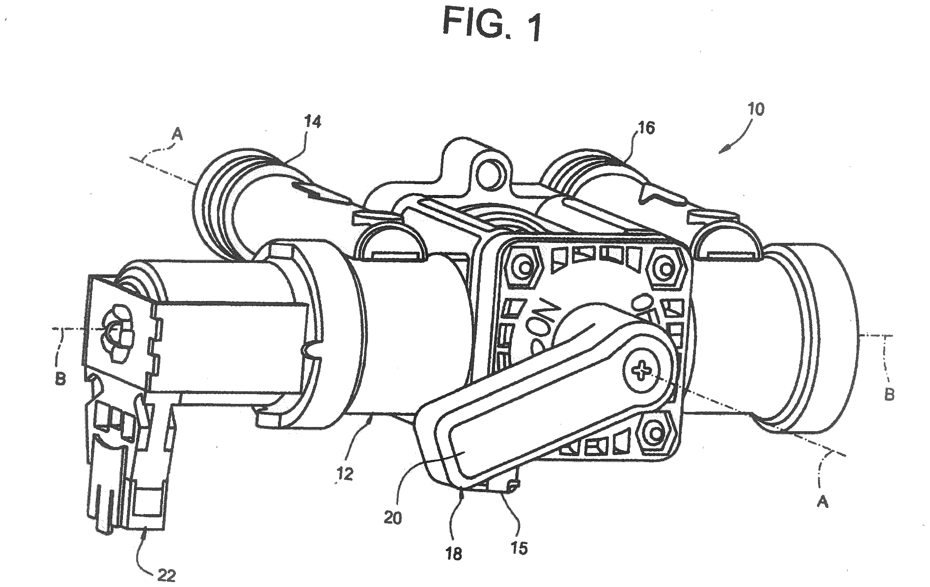

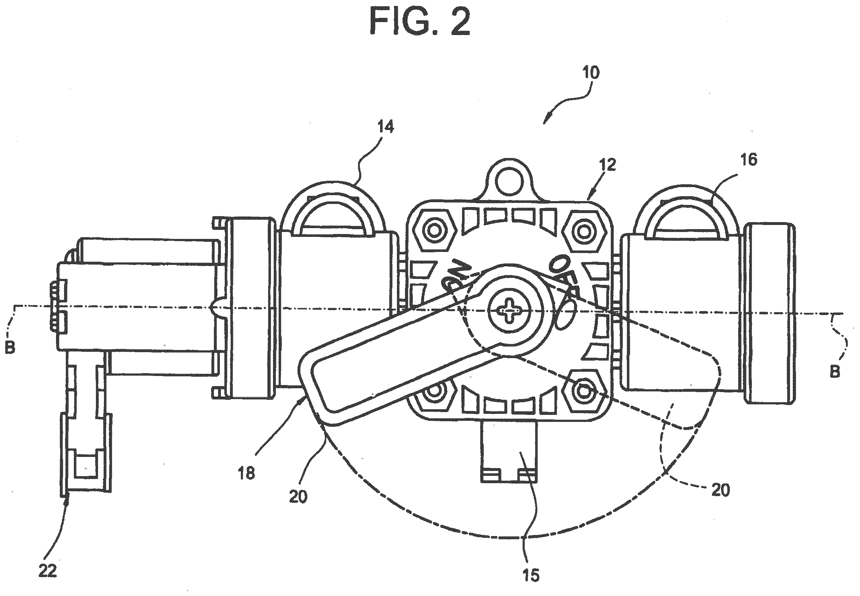

With reference to Figures 1 and 2 in particular, an embodiment of a water disconnector unit according to the present invention, generally indicated 10, has been developed in particular for controlling the supply of water to a water circuit of a boiler (details not shown).

The disconnector unit 10 comprises a hollow casing 12 which has an inlet duct 14 and an outlet duct 16 for connection in flow communication with an external water source (not shown), for example, the water mains, and with an external water user (not shown), for example, the boiler water circuit, respectively. The hollow casing 12 further comprises a discharge duct 15.

The inlet duct 14 optionally contains a filter 14a. The outlet duct 16 preferably comprises a one-way valve 16a suitable for preventing a backflow of the fluid coming from the water user towards the inlet duct 14.

As can be seen in Figures 1 and 2 in particular, the inlet duct 14 and the outlet duct 16 are parallel to one another, whereas the discharge duct 15 is perpendicular to the plane in which they lie.

The disconnector unit 10 further comprises a first control device 18, of which a rotatable lever 20 mounted for rotating about a rotation axis A-A can be seen, and a second, electrically-actuable control device 22.

The rotatable lever 20 can be rotated through an angle of about 135° between an opening position (shown in solid outline in Figures 1 and 2) and a closure position (shown in broken outline in Figure 2). The rotation axis A-A is parallel to the axes identified by the inlet duct 14 and the outlet duct 16.

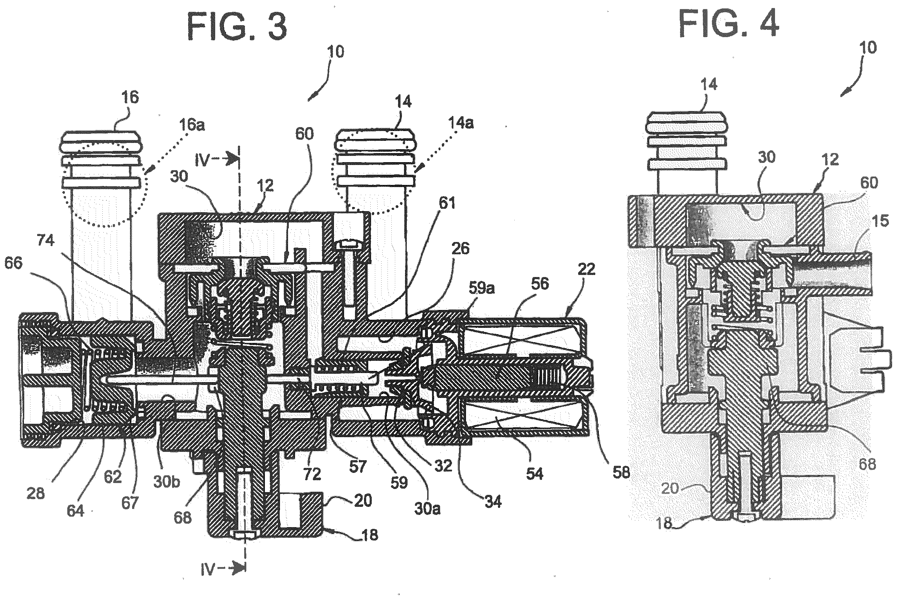

With reference to Figures 3 to 6 in particular, the casing 12 defines in its interior an inlet chamber 26 into which the inlet duct 14 opens and an outlet chamber 28 which opens into the outlet duct 16. Moreover, an intermediate chamber 30 is interposed between the inlet chamber 26 and the outlet chamber 28.

The inlet chamber 26 and the outlet chamber 28 are in flow communication with the external water source and with the external water user, respectively, through the inlet duct 14 and the outlet duct 16, respectively.

Moreover, the disconnector unit 10 comprises an inlet valve unit 32 interposed between the intermediate chamber 30 and the inlet chamber 26.

Preferably, the inlet chamber 26 has an annular shape into which the inlet duct 14 opens radially, and the intermediate chamber 30 defines an inflow region 30a which also has an annular shape and is surrounded by the inlet chamber 26.

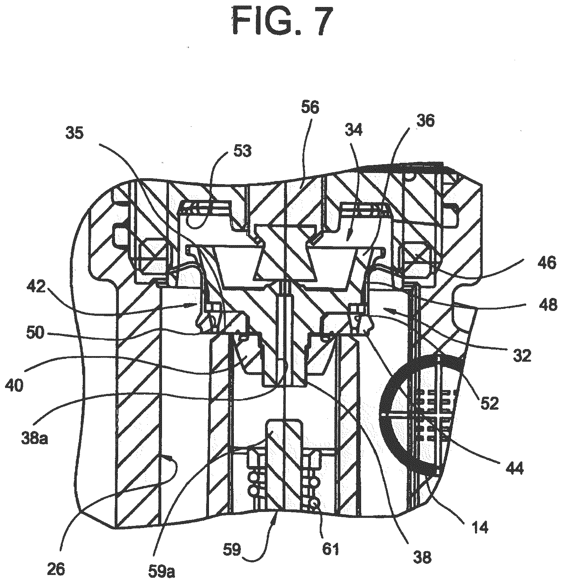

Some preferred constructional details of a portion of the inlet valve unit 32 can be seen in the enlarged view of Figure 7. It can be seen that the inlet valve unit 32 comprises, in a known manner, a first inlet closure member 34 having a goblet-shaped front portion 36. The first inlet closure member 34 further comprises a rear end portion which defines a substantially cylindrical shank 38 and in which there is an axial cavity 38a which is open at its ends in the region of the front portion 36 and of the shank 38. At the end of the shank 38, the first inlet closure member 34 includes a frustoconical element 40 which is advantageously secured by ultra-sound welding.

The first inlet closure member 34 further comprises a shaped membrane 42 having a narrow annular base 44 which is clamped between the front portion 36 and the frustoconical element 40, an enlarged ring 46 which is locked inside the hollow casing 12, and a diaphragm 48 interposed between the base 44 and the ring 46. The base 44 has a first peripheral orifice 50 and a second peripheral orifice 52 and the shaped membrane 42 divides the inlet chamber 26 from a control chamber 53 for the inlet valve unit 32, as will be described below.

Still with reference to Figure 7, the inlet valve unit 32 further comprises a first inlet valve seat 35 which is associated with the first inlet valve closure member 34, is formed by the tubular walls defining the inflow chamber 30a, and is intended to be blocked peripherally by the annular base 44. As will be explained further below, the first inlet valve closure member 34 and the first inlet valve seat 35 perform the function of an on-off valve.

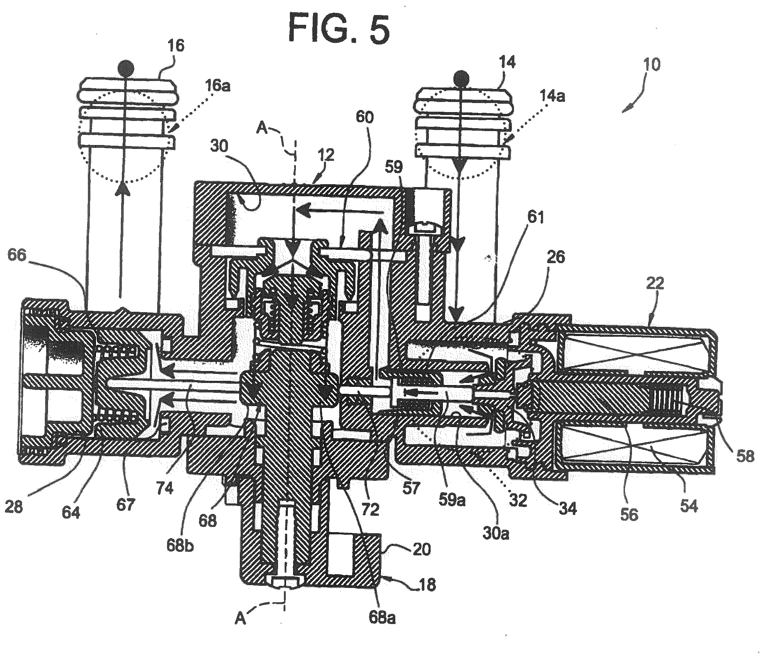

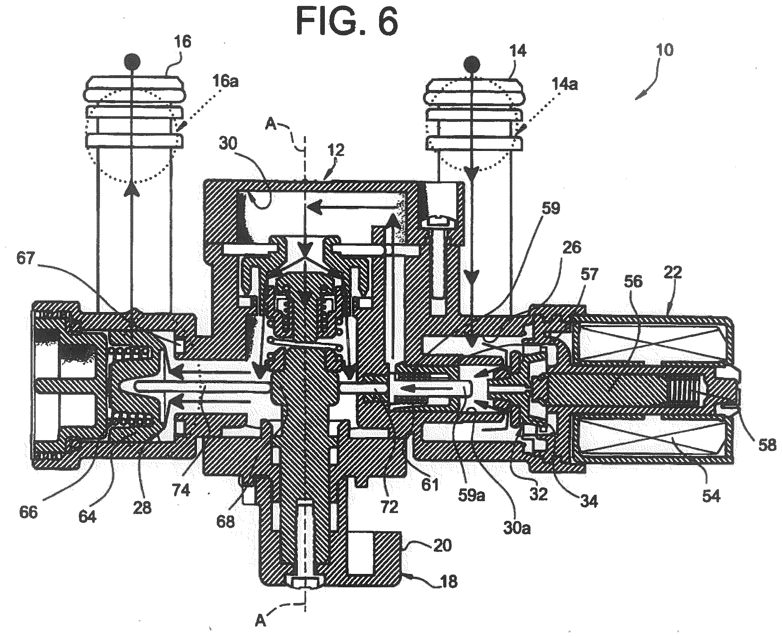

With reference to Figures 3 to 6, it can be seen that the second control device 22 preferably comprises a solenoid 54 and a movable core 56 made of ferromagnetic material, around which the solenoid 54 is wound and which is movable from an extended position (Figures 3 and 4) to a retracted position (Figures 5 and 6) by excitation of the solenoid. The second control device 22 further comprises a resilient biasing element 58 which tends to keep the movable core 56 in the extended position. The movable core 56 cooperates with the first inlet closure member 34 in the manner which will be described below.

The inlet valve unit 32 further comprises a second inlet closure member 59 which is located downstream of the first inlet closure member 34 in the inflow chamber 30a and which has an elongate end portion 59a for cooperating with the shank 38. The second inlet closure member 59 allows fluid coming from the inflow region 30a to flow towards the outlet chamber 28. A second resilient biasing element 61 is associated with the second inlet closure member 59 and tends to keep the second inlet closure member in the closure position.

The intermediate chamber 30 is provided with a discharge valve device 60 which performs the function of a pressure limiter valve in accordance with the reduced pressure zone principle. In other words, the discharge valve device 60 is interposed between the intermediate chamber 30 and the outside environment. It can thus put the intermediate chamber 30 and the outside environment into flow communication through the discharge duct 15 when the pressure difference between the inlet chamber 26 and the intermediate chamber 30 is below a predetermined threshold value. This measure is used to prevent a backflow of fluid towards the inlet chamber 26, which could pollute the external water source connected to the inlet duct 14. Discharge devices of various types which function on the basis of this principle are known in the art and are not described below since they do not constitute the subject of the present invention.

The intermediate chamber 30 terminates in a narrow, annular outflow region 30b which in turn opens - preferably in an axial direction - into the outlet chamber 28 which has an enlarged annular shape.

An outlet valve device is interposed between the outflow region 30b of the intermediate chamber 30 and the outlet chamber 28; the outlet valve device advantageously takes the form of a non-return valve 62 which comprises a cup-shaped non-return closure member 64 and a resilient biasing element 66 which bears against the non-return closure member 64. The resilient biasing element 66 tends to keep the non-return closure member 64 in the closure position (Figures 3 and 4) in which it prevents the flow of fluid between the outflow region 30b and the outlet chamber 28.

The valve seat of the outlet valve device 62 is defined by an annular shoulder seal 67 carried by the end walls of the outflow region 30b. The closure surface of the outlet valve device 62 is formed by the peripheral region of the non-return closure member 64.

Moreover, the first control device 18 further comprises a cam element 68 which is advantageously housed in the intermediate chamber 30. The cam element 68 cooperates simultaneously with the inlet and outlet valve devices 32, 62 and is movable to a closure arrangement (Figures 3, 4 and 6) or to an opening arrangement (Figure 5). In the closure arrangement and in the opening arrangement, the cam element 68 arranges both the inlet valve unit 32 and the outlet valve unit 62 in the closure position and in the opening position, respectively.

Preferably, the cam element 68 has a two-lobed shape and is rotated by the rotatable lever 20 with which is it mounted coaxially on the same rotation axis A-A.

The first control device 18 advantageously comprises a rod-like inlet element 72 and a rod-like outlet element 74 which are mounted for sliding so as to be guided by internal walls of the hollow casing 12. The rod-like inlet and outlet elements 72, 74 are located in the inflow region 30a and in the outflow region 30b, respectively, and are movable in an aligned manner along the same actuation axis B-B (Figures 1 and 2) by the action of the cam element 68, as will be described below. The actuation axis B-B is preferably perpendicular to the rotation axis A-A.

Figures 3 and 4 illustrate the closure arrangement of the cam element 68 in which there is no flow of fluid between the inlet duct 14 and the outlet duct 16.

In this condition, the movable core 56 bears against the front portion 36 of the first inlet closure member 34 and thus blocks the axial cavity 38a. The fluid coming from the inlet duct 14 and entering the inlet chamber 26 can thus pass through the orifices 50, 52 in the annular base 44 of the shaped membrane 42 and enter the control chamber 53, exerting a thrust on the front portion 36 of the first inlet closure member 34. The thrust exerted on the first portion 36 of the first closure member 34 by the fluid that is present in the control chamber 53 is greater than the force exerted on the diaphragm 48 by the fluid that is present in the inlet chamber 26. The annular base 44 is consequently kept bearing against the first inlet valve seat 35 which therefore prevents the flow of fluid through the inlet valve unit 32.

Figure 5 shows the opening arrangement of the cam element 68 as a result of the intervention of a user who moves the rotatable lever 20 to the opening position.

In this condition, the cam element 68 urges the rod-like elements 72 and 74 away from its own rotation axis A-A by virtue of the thrust exerted by its lobes 68a, 68b which are arranged at 180° to one another. The rod-like elements 72 and 74 thus urge the second inlet closure member and non-return valve 59, 62 to open by cooperating with the head of the second inlet closure member 59 and with the concave portion of the non-return closure member 64, respectively. The second inlet closure member 59 is thus translated away from the rotation axis A-A and its elongate end 59a in turn urges the first inlet closure member 34 away from its valve seat 35.

There is thus no obstacle to the flow of the fluid coming from the inlet duct 14 towards the outlet duct 16 since the fluid can also pass through the intermediate chamber 30 and the non-return valve 62.

Figure 6 shows the cam element 68 in the closure position and an opening actuation of the second control device 22.

In this condition, the movable core 56 is lifted from the front portion 36 of the first inlet closure member 34 since it is attracted by the electromagnetic force developed by the solenoid 54. The blocked axial cavity 38a is consequently freed and the fluid inside the control region 53 can flow freely through the inflow region 30a of the intermediate chamber 30. At the same time, the pressure in the control chamber 53 is cancelled out and the first inlet closure member 34 can be lifted from its valve seat 35 as a result of the thrust exerted on the diaphragm 48 by the fluid which reaches the inlet chamber 26. The liquid is consequently free to pass through the second inlet closure member and non-return valve 59, 62 without encountering obstacles. The opening actuation of the electromagnetic actuator 24 thus allows fluid to flow between the inlet duct 14 and the outlet duct 16, irrespective of the arrangement of the cam element 68.

Moreover, the cam element 68 may advantageously be provided with a biasing spring (not shown) which tends to keep it in the closure position.

## Claims

1. A water disconnector unit (10), in particular for controlling the supply of water to a water circuit of a boiler, comprising,
- a hollow casing (12) defining:
an inlet chamber and an outlet chamber (26, 28) for connection in flow communication with an external water source and with an external water user, respectively, and
an intermediate chamber (30) interposed between the inlet chamber (26) and the outlet chamber (28),
- an inlet valve unit (32) and an outlet valve device (62) which are interposed between the intermediate chamber (30) and the inlet chamber (26), and between the intermediate chamber (30) and the outlet chamber (28), respectively,
- a discharge valve unit (60) which is interposed between the intermediate chamber (30) and the outside environment and is arranged to put them into flow communication when the difference between the pressure of the inlet chamber (26) and the pressure of the intermediate chamber (30) is below a predetermined threshold value,
- first, manually-operable control means (18) associated with the hollow casing (12) and comprising
a cam element (68) which is rotatable about a rotation axis (A-A), cooperates simultaneously with the inlet valve unit (32) and with the outlet valve device (62), and is movable to a closure arrangement or to an opening arrangement in which the cam element (68) arranges both the inlet valve unit (32) and the outlet valve device (62) for closure or for opening, preventing or permitting a flow of fluid from the inlet chamber (26) towards the outlet chamber (28), respectively,
said disconnector further comprising second control means (22) which are associated with the hollow casing (12), can be actuated electrically for opening, and are arranged to bring the inlet valve unit (32) to the opening position irrespective of the arrangement of the cam element (68).

2. A disconnector unit according to Claim 1 in which the outlet valve device (62) is suitable for being arranged for opening when the second control means (22) are actuated for opening.

3. A disconnector unit according to Claim 2 in which the outlet valve device comprises a non-return valve (62).

4. A disconnector unit according to Claim 2 or Claim 3, comprising a further non-return valve (16a) located downstream of the outlet valve device (62).

5. A disconnector unit according to any one of the preceding claims in which the first control means (18) further comprise:
a rod-like inlet element and a rod-like outlet element (72, 74) which are interposed mechanically between the cam element (68) and the inlet valve unit (32), and between the cam element (68) and the outlet valve device (62), respectively, and which are intended to urge the inlet valve unit (32) and the outlet valve device (62), respectively, towards their respective opening positions, against the action of respective first and second resilient biasing means (61, 66).

6. A disconnector unit according to Claim 5 in which the rod-like inlet element and the rod-like outlet element (72, 74) are aligned and are movable along a common actuation axis (B-B).

7. A disconnector unit according to Claim 6 in which the rotation axis (A-A) and the actuation axis (B-B) are perpendicular.

8. A disconnector unit according to any one of the preceding claims in which the cam element (68) is associated with a resilient biasing element which tends to keep it in the closure position.

## Patentansprüche

1. Wassertrenneinheit (10), insbesondere zur Steuerung der Wasserzufuhr zu einem Wasserkreislauf eines Boilers, umfassend:
- ein Hohlgehäuse (12), das Folgendes bestimmt:
eine Einlasskammer und eine Auslasskammer (26, 28) für die Fließverbindung jeweils mit einer externen Wasserquelle und mit einem externen Wasserverbraucher, und
eine Zwischenkammer (30), die zwischen der Einlasskammer (26) und der Auslasskammer (28) eingefügt ist,
- eine Einlassventileinheit (32) und eine Auslassventilvorrichtung (62), die zwischen der Zwischenkammer (30) und der Einlasskammer (26), beziehungsweise zwischen der Zwischenkammer (30) und der Auslasskammer (28) eingefügt sind,
- eine Ablassventileinheit (60), die zwischen der Zwischenkammer (30) und der Außenumgebung eingefügt und angeordnet ist, sie in Fließverbindung zu setzen, wenn die Differenz zwischen dem Druck der Einlasskammer (26) und dem Druck der Zwischenkammer (30) unter einem vorausbestimmten Grenzwert liegt,
- erste, manuell betätigbare Steuermittel (18), die mit dem Hohlgehäuse (12) verbunden sind und umfassend
ein Nockenelement (68), das um eine Drehachse (A-A) drehbar ist, gleichzeitig mit der Einlassventileinheit (32) und mit der Auslassventilvorrichtung (62) zusammenwirkt und in eine Schließanordnung oder in eine Öffnungsanordnung bewegbar ist, in der das Nockenelement (68) sowohl die Einlassventileinheit (32) als auch die Auslassventilvorrichtung (62) zum Schließen oder Öffnen anordnet, wodurch ein Fluidfluß von der Einlasskammer (26) beziehungsweise zur Auslasskammer (28) verhindert oder ermöglicht wird, **dadurch gekennzeichnet, dass**
die Trenneinheit überdies zweite Steuermittel (22) umfasst, die mit dem Hohlgehäuse (12) verbunden sind, zum Öffnen elektrisch betätigt werden können und angeordnet sind, die Einlassventileinheit (32) in die Öffnungsstellung zu bringen, ungeachtet der Anordnung des Nockenelements (68).

2. Trenneinheit nach Anspruch 1, wobei die Auslassventilvorrichtung (62) geeignet ist, zum Öffnen angeordnet zu werden, wenn die zweiten Steuermittel (22) zum Öffnen betätigt werden.

3. Trenneinheit nach Anspruch 2, wobei die Auslassventilvorrichtung ein Rückschlagventil (62) umfasst.

4. Trenneinheit nach Anspruch 2 oder 3, umfassend ein weiteres Rückschlagventil (16a), das der Auslassventilvorrichtung (62) nachgelagert ist.

5. Trenneinheit nach einem der vorhergehenden Ansprüche, wobei die ersten Steuermittel (18) überdies Folgendes umfassen:
ein stabartiges Einlasselement und ein stabartiges Auslasselement (72, 74), die zwischen dem Nockenelement (68) und der Einlassventileinheit (32) beziehungsweise zwischen dem Nockenelement (68) und der Auslassventilvorrichtung (62) mechanisch eingefügt sind, und die die Einlassventileinheit (32) beziehungsweise die Auslassventilvorrichtung (62) in ihre jeweiligen Öffnungsstellungen drängen sollen, entgegen der Wirkung erster beziehungsweise zweiter elastischer Vorspannmittel (61, 66).

6. Trenneinheit nach Anspruch 5, wobei das stabartige Einlasselement und das stabartige Auslasselement (72, 74) entlang einer gemeinsamen Betätigungsachse (B-B) ausgerichtet und bewegbar sind.

7. Trenneinheit nach Anspruch 6, wobei die Drehachse (A-A) und die Betätigungsachse (B-B) senkrecht zueinander verlaufen.

8. Trenneinheit nach einem der vorhergehenden Ansprüche, wobei das Nockenelement (68) mit einem elastischen Vorspannelement verbunden ist, das dazu neigt, es in der Schließstellung zu halten.

## Revendications

1. Unité de sectionneur d'eau (10), en particulier pour contrôler l'alimentation en eau dans un circuit d'eau d'une chaudière, comprenant,
- un corps creux (12) définissant :
une chambre d'admission et une chambre d'évacuation (26, 28) pour le raccordement en communication d'écoulement avec une source d'eau externe et avec un utilisateur d'eau externe, respectivement, et
une chambre intermédiaire (30) interposée entre la chambre d'admission (26) et la chambre d'évacuation (28),
- une unité de soupape d'admission (32) et un dispositif de soupape d'évacuation (62) qui sont interposées entre la chambre intermédiaire (30) et la chambre d'admission (26), et entre la chambre intermédiaire (30) et la chambre d'évacuation (28), respectivement,
- une unité de soupape d'échappement (60) qui est interposée entre la chambre intermédiaire (30) et l'environnement extérieur et est agencée pour les mettre en communication d'écoulement lorsque la différence entre la pression de la chambre d'admission (26) et la pression de la chambre intermédiaire (30) est inférieure à une valeur seuil prédéterminée,
- des premiers moyens de commande actionnables manuellement (18) associés au corps creux (12) et comprenant
un élément de came (68) qui est rotatif autour d'un axe de rotation (A-A), coopère simultanément avec l'unité de soupape d'admission (32) et avec le dispositif de soupape d'évacuation (62), et est mobile vers un agencement de fermeture ou vers un agencement d'ouverture dans lesquels l'élément de came (68) agence à la fois l'unité de soupape d'admission (32) et le dispositif de soupape d'évacuation (62) pour la fermeture ou pour l'ouverture, empêchant ou permettant un écoulement de fluide de la chambre d'admission (26) en direction de la chambre d'évacuation (28), respectivement, **caractérisé en ce que**
ladite unité de sectionneur comprend en outre des seconds moyens de commande (22) qui sont associés au corps creux (12), peuvent être actionnés électriquement pour l'ouverture, et sont agencés pour amener l'unité de soupape d'admission (32) vers la position d'ouverture quel que soit l'agencement de l'élément de came (68).

2. Unité de sectionneur selon la revendication 1 dans laquelle le dispositif de soupape d'évacuation (62) est adapté pour être agencé pour l'ouverture lorsque les seconds moyens de commande (22) sont actionnés pour l'ouverture.

3. Unité de sectionneur selon la revendication 2 dans laquelle le dispositif de soupape d'évacuation comprend un clapet anti-retour (62).

4. Unité de sectionneur selon la revendication 2 ou la revendication 3, comprenant un autre clapet anti-retour (16a) situé en aval du dispositif de soupape d'évacuation (62).

5. Unité de sectionneur selon l'une quelconque des revendications précédentes dans laquelle les premiers moyens de commande (18) comprennent en outre :
un élément d'admission du type tige et un élément d'évacuation du type tige (72, 74) qui sont interposés mécaniquement entre l'élément de came (68) et l'unité de soupape d'admission (32), et entre l'élément de came (68) et le dispositif de soupape d'évacuation (62), respectivement, et qui sont destinés à pousser l'unité de soupape d'admission (32) et l'unité de soupape d'évacuation (62), respectivement, en direction de leurs positions d'ouverture respectives, contre l'action de premiers et seconds moyens de sollicitation élastiques respectifs (61, 66).

6. Unité de sectionneur selon la revendication 5 dans laquelle l'élément d'admission du type tige et l'élément d'évacuation du type tige (72, 74) sont alignés et sont mobiles le long d'un axe d'actionnement (B-B) commun.

7. Unité de sectionneur selon la revendication 6 dans laquelle l'axe de rotation (A-A) et l'axe d'actionnement (B-B) sont perpendiculaires.

8. Unité de sectionneur selon l'une quelconque des revendications précédentes dans laquelle l'élément de came (68) est associé à un élément de sollicitation élastique qui a tendance à le maintenir dans la position de fermeture.
